# EUROPÄISCHE PATENTSCHRIFT

(11) **EP 2 755 889 B1**
(45) Veröffentlichungstag und Bekanntmachung des Hinweises auf die Patenterteilung: **29.11.2017**
(21) Anmeldenummer: 12750366.2
(22) Anmeldetag: 21.08.2012
(51) Int. Cl.: B64C 9/16

(54) **AUFTRIEBKLAPPENVORRICHTUNG**
LANDING FLAP DEVICE
DISPOSITIF DE VOLETS D'ATTERRISSAGE

(30) Priorität: 16.09.2011 DE 102011082888
(43) Veröffentlichungstag der Anmeldung: 23.07.2014
(73) Patentinhaber: Airbus Defence and Space GmbH, 85521 Ottobrunn (DE); Airbus Operations GmbH, 21129 Hamburg (DE)
(72) Erfinder: HAVAR, Tamas, 83052 Bruckmuehl (DE); PEREZ-SANCHEZ, Juan, 83043 Bad Aibling (DE); ENDER, Tobias, 28259 Bremen (DE); SEACK, Oliver, 28203 Bremen (DE)
(74) Vertreter: Kastel, Stefan
(86) Internationale Anmeldenummer: PCT/EP2012/066245
(87) Internationale Veröffentlichungsnummer: WO 2013/037610

(56) Entgegenhaltungen:
- US-A- 2 502 315
- US-A- 2 836 380
- US-A- 3 480 235
- US-A- 3 785 594
- US-A1- 2002 005 461

## Beschreibung

Die Erfindung betrifft eine Auftriebsklappenanordnung mit einer Auftriebsklappenlagervorrichtung zur Führung und Verstellung einer Auftriebsklappe. Weiter betrifft die Erfindung einen Tragflügel für ein Flugzeug mit einer solchen Auftriebsklappenanordnung. Schließlich betrifft die Erfindung ein mit einem solchen Tragflügel versehenes Flugzeug.

Aus der EP 0 503 158 A1 ist eine Antriebs- und Führungsvorrichtung für eine an einem Flugzeugtragflügel angeordnete Klappe bekannt. Die bekannte Antriebs- und Führungsvorrichtung weist einen durch einen Wagen gebildeten Schlitten auf, an dem die Klappe beweglich gehalten ist, wobei der Schlitten auf einer Trag- und Führungsschiene verfahrbar ist und mittels eines Stellantriebes antreibbar ist. Der Stellantrieb wirkt über einen Hebelmechanismus mit einem Antriebshebel und einer Antriebsstange.

Aus der WO 03/008266 A1 ist ein Auftriebsklappenmechanismus zur Verstellung einer einem Tragflügel zugeordneten Auftriebs-Klappe mittels eines Antriebssystems bekannt. Der bekannte Auftriebsklappenmechanismus ist an einem von mehreren an dem Tragflügel befestigten Klappenträger gelagert und weist eine Lenkhebel-Anordnung zum Bilden einer Hauptanschlussmechanik und einem Führungshebel zum Bilden einer Nebenanschlussmechanik auf.

Aus der US2002/0005461 A1 ist ein Tragflügel für ein Flugzeug bekannt, wobei in Spannweitenrichtung seitlich nebeneinander eine innere Hinterkantenklappe als erste Auftriebsklappe und eine zweite Hinterkantenklappe als zweite Auftriebsklappe angeordnet sind, wobei sich zwischen den Hinterkantenklappen eine Aufhängung eines Triebwerks befindet. Die Hinterkantenklappen sind jeweils in drei Sektionen - eine Vorklappe, eine Mittelklappe und eine hintere Klappe - aufgeteilt, die in ausgefahrenem Zustand in Flugrichtung nicht seitlich nebeneinander sondern hintereinander angeordnet sind und im eingefahrenen Zustand teilweise übereinander und teilweise hintereinander angeordnet sind. Zur Führung und Verstellung weisen beide Hinterkantenklappen Auftriebsklappenlagervorrichtungen auf, die zur Verstellung aller drei Sektionen ausgebildet sind. Dabei ist zur gegenseitigen Führung der Vorklappe und der Mittelklappe eine Führungseinrichtung mit gekrümmter Führungsschiene und dahinter zur gegenseitigen Führung der Mittelklappe und der hinteren Klappe eine Führungseinrichtung mit gekrümmter Führungsschiene vorgesehen.

Eine weitere vergleichbare Klappenlagervorrichtung zur Führung unterschiedlicher hintereinander angeordneter Sektionen einer Hinterkantenklappe ist aus der US 3 785 594 A bekannt. Eine seitlich benachbarte Anordnung von Klappen ist nicht offenbart.

Aus der US 3 480 235 A ist eine Auftriebsklappenanordnung mit einer als "Inboard Flap Section" bezeichneten ersten Auftriebsklappe und einer in Spannweitenrichtung seitlich hierzu benachbarten, als "Outboard Flap Section" bezeichneten zweiten Auftriebsklappe bekannt. Die erste und die zweite Auftriebsklappe sind in hintereinander angeordnete Sektionen aufgeteilt, die aneinander geführt sind, wobei die vorderste Sektion mittels im Inneren der Klappen angeordneter gekrümmter Führungsschienen an einer Struktur des Tragflügels geführt und gelagert ist.

Der Erfindung liegt die Aufgabe zugrunde, eine Auftriebsklappenanordnung mit einer Auftriebsklappenlagervorrichtung zur Führung und Verstellung von Auftriebsklappen zur Verfügung zu stellen, die Verbesserungen hinsichtlich Bauraum, Herstellbarkeit und/oder Gewichtsoptimierungen ermöglicht.

Diese Aufgabe wird mit einer Auftriebsklappenanordnung nach Anspruch 1 gelöst. Vorteilhafte Ausgestaltungen sind Gegenstand der Unteransprüche. Vorteilhafte

Verwendungen der Auftriebsklappenanordnung sind Gegenstand der Nebenansprüche.

Die Erfindung schafft eine eine Auftriebsklappenanordnung nach Anspruch 1, umfassend eine erste Auftriebsklappe und eine seitlich dazu angeordnete zweite Auftriebsklappe sowie eine zwischen der ersten und der zweiten Auftriebsklappe angeordnete Auftriebsklappenlagervorrichtung. Die Auftriebsklappenlagervorrichtung ist zur Führung und Verstellung der ersten Auftriebsklappe und der zweiten Auftriebsklappe ausgebildet und mit einer ersten Führungseinrichtung zum Führen der ersten Auftriebsklappe und einer zweiten Führungseinrichtung zum Führen der zweiten Auftriebsklappe versehen, wobei die erste und die zweite Führungseinrichtung jeweils zwei gekrümmte Führungsschienen aufweisen.

Dabei ist vorgesehen, dass die erste Führungseinrichtung auf einer ersten Seite der Auftriebsklappenlagervorrichtung angeordnet ist und die zweite Führungseinrichtung auf einer der ersten Seite entgegengerichteten zweiten Seite angeordnet ist.

Besonders bevorzugt ist, dass eine Antriebseinrichtung zum gleichzeitigen Verstellen der ersten und der zweiten Führungseinrichtung vorgesehen ist.

Vorzugsweise ist vorgesehen, dass wenigstens eine der Führungseinrichtungen einen Führungsschlitten aufweist, der mittels einer ersten Schienenanlenkung verschiebbar an einer ersten gekrümmten Führungsschiene der Führungseinrichtung verschiebbar geführt ist und mittels einer zweiten Schienenanlenkung verschiebbar an einer zweiten gekrümmten Führungsschiene verschiebbar geführt ist.

Gemäß einer Ausgestaltung der Erfindung ist vorgesehen, dass der wenigstens eine Führungsschlitten einen ersten Klappenbefestigungsbereich mit wenigstens einer ersten Klappenbefestigungseinrichtung und eine zweiten Klappenbefestigungsbereich mit wenigstens einer zweiten Klappenbefestigungseinrichtung aufweist, wobei die erste und die zweite Klappenbefestigungseinrichtung voneinander beabstandet sind, wobei der erste und der zweite Klappenbefestigungsbereich des Führungsschlittens in quer zu einer durch die Führungseinrichtung geführten Verstellrichtung verlaufenden Richtung relativ beweglich zueinander aneinander befestigt sind.

Es ist bevorzugt, dass die erste und die zweite Führungseinrichtung jeweils mit dem Führungsschlitten versehen sind, wobei der erste Führungsschlitten der ersten Führungseinrichtung und der zweite Führungsschlitten der zweiten Führungseinrichtung mittels einer Querverbindung miteinander verbunden sind.

Besonders bevorzugt ist, dass ein an einem Tragflügel befestigbarer Grundkörper oder Grundkörper vorgesehen ist, der auf einer ersten Seite die erste und die zweite Führungsschiene der ersten Führungseinrichtung und auf einer entgegengerichteten zweiten Seite die erste und die zweite Führungsschiene der zweiten Führungseinrichtung aufweist.

Vorzugsweise ist vorgesehen, dass eine durch den ersten Führungsschlitten, den zweiten Führungsschlitten und die Querverbindung gebildete Schlittenanordnung den Grundkörper umgreift.

Bei einer vorteilhaften Ausgestaltung ist vorgesehen, dass die in dem Grundkörper angeordnete Antriebseinrichtung an der Schlittenanordnung, insbesondere an der Querverbindung, angreift.

Es ist bevorzugt, dass wenigstens eine der Schienenanlenkungen als Erfassungselement zum Erfassen der zugeordneten Führungsschiene wenigstens eine Rolle aufweist, die an wenigstens einer Rollenbahn der zugeordneten Führungsschiene angreift und/oder dass wenigstens eine der Schienanlenkungen als Erfassungselement wenigstens einen Gleitstein aufweist, der an einer Gleitbahn der zugeordneten Führungsschiene angreift.

Besonders bevorzugt ist, dass wenigstens eine der Schienenanlenkungen mit der zugeordneten Führungsschiene in formschlüssigen Eingriff ist, um seitliche Querkräfte aufzunehmen.

Vorzugsweise ist vorgesehen, dass die erste Schienenanlenkung verschiebbar auf einer ersten Stützfläche an der ersten Führungsschiene abgestützt ist, während die zweite Schienenanlenkung verschiebbar auf einer zweiten Stützfläche an der zweiten Führungsschiene abgestützt ist, wobei die erste Stützfläche größer als die zweite Stützfläche ist und/oder wobei sich die erste Stützfläche in Verschieberichtung über eine größere Strecke als die zweite Stützläche erstreckt.

Gemäß eines weiteren Aspekts schafft die Erfindung einen mit einer solchen Auftriebsklappenanordnung versehenen Tragflügel für ein Flugzeug.

Gemäß eines weiteren Aspekts schafft die Erfindung ein mit einem solchen Tragflügel versehenes Flugzeug.

Die Auftriebsklappen sind vorzugsweise Landeklappen.

In einer besonders bevorzugten Ausgestaltung der Erfindung sind in der Mitte, zwischen zwei Landeklappen, Führungseinrichtungen zum Führen der beiden Landeklappen vorgesehen, wobei beidseitig wenigstens zwei gekrümmte Führungsschienen zur Verstellung und vorzugsweise ein Antrieb zur gemeinsamen Verstellung der Auftriebsklappen vorgesehen sind.

Vorteile der Erfindung oder vorteilhafter Ausgestaltungen davon sind insbesondere:
- Es ist nur ein geringerer Bauraum für die Lagervorrichtung und die Verstelleinrichtung zum Lagern und Verstellen der Auftriebsklappen nötig;
- Die Auftriebsklappenlagervorrichtung ist von der Struktur her leichter als bisher bekannte Auftriebsklappenlagerungen und -verstellungen;
- Die Auftriebsklappenanordnung lässt sich leichter herstellen; insbesondere wird eine einfachere Montage ermöglicht und/oder lässt sich Montagezeit einsparen;
- Aufgrund des kompakten Aufbaus lässt sich eine kleinere Kopffläche und damit ein geringerer Luftwiderstand und so eine bessere Aerodynamik erreichen;
- Eine geforderte Landeklappenposition im ausgefahrenen Zustand mit bester Aerodynamik lässt sich leichter erfüllen als mit bisher bekannten Lager- und/oder Verstelleinrichtungen;
- Es lässt sich eine optimale Lagerung für sogenannte Vielholmer-Landeklappen und/oder Verbundwerkstoff-Landeklappen mit Querholmversteifungen erreichen.

Gemäß einer bevorzugten Ausgestaltung ist wenigstens ein Wagen oder Führungsschlitten vorgesehen, an dem sich wenigstens eine Auftriebsklappe schwingend aufhängen lässt. Vorzugsweise ist der Führungsschlitten hierzu in wenigstens zwei Auftriebsklappenbefestigungsbereiche unterteilt, die beweglich zueinander sind, um so Verkantungen und/oder Verbiegungen der daran befestigten Auftriebsklappen auszugleichen.

Vorzugsweise ist ein Grundkörper oder Basiskörper vorgesehen, an dem beidseitig Führungseinrichtungen mit mehreren gekrümmten Führungsschienen vorhanden sind und der an einer Flügelstruktur, beispielsweise einem Tragflügel, befestigt werden kann.

Vorzugsweise ist eine Schlittenanordnung vorgesehen, die diesen Grundkörper umgreift und somit zur Versteifung beiträgt. Dadurch ist es wenig wahrscheinlich, dass Auftriebsklappen aus ihren Führungen am Grundkörper driften.

Eine solche Schlittenanordnung lässt sich weiter zum Angreifen eines Antriebes zum gemeinsamen Antreiben mehrere Auftriebsklappen nutzen.

Weiter lässt sich eine solche Schlittenanordnung zur Befestigung einer aerodynamischen Verkleidung für den Führungskörper nutzen, die sich dann mit der Schlittenanordnung und mit den Auftriebsklappen gemeinsam verstellen lässt. Dadurch lässt sich insgesamt die Aerodynamik verbessern; Schlitze und Spalte lassen sich in den unterschiedlichen Stellungen verringern.

Vorzugsweise ist eine seitliche Fixierung der Auftriebsklappen zwecks Aufnahme von Querlasten vorgesehen. Dies lässt sich beispielsweise über einen formschlüssigen Angriff einer mit den Auftriebsklappen verbindbaren Schienenanlenkung an der zugeordneten Führungsschiene erreichen.

Alternativ oder zusätzlich kann zur seitlichen Fixierung eine dritte Führungsschiene, z.B. an einer der horizontalen Seiten, z.B. Oberseite oder Unterseite, vorgesehen sein, die durch ein Führungselement in Längsrichtung verschiebbar aber in seitlicher Richtung fixiert vorzugsweise formschlüssig erfasst wird.

Die Schienenanlenkungen an den wenigstens zwei gekrümmten Führungsschienen ist vorzugsweise unterschiedlich ausgestaltet. Beispielsweise ist eine der Schienenanlenkungen an einer ersten Schiene verschiebbar an der zugeordneten Führungsschiene derart aufgenommen, dass sie sich auf einer größeren längsgerichteten Stützfläche abstützt. Dies kann z.B. durch eine Rollenanordnung mit mehreren Rollen, durch einen länglichen Gleitstein oder durch in Längsrichtung aufeinanderfolgende mehrere Gleitsteine erreicht werden. An der weiteren Führungsschiene ist vorzugsweise eine kleinere und leichtgewichtigere Schienenanlenkung vorgesehen, die z.B. nur eine Rolle oder nur einen kleinere Gleitstein aufweist.

Die Schienenanlenkungen können beispielsweise Rollen- und/oder Gleitsteine aufweisen, wobei die Führungsschienen jeweils komplementär ausgebildet sind. Es sind sowohl Ausführungen denkbar, bei denen die Schienenanlenkungen eine Führungsschiene umgreifen, als auch Ausführungen denkbar, bei denen die Führungsschienen Erfassungselemente - z.B. Rollen- oder Gleitsteine - umgreifen. Der Eingriff zwischen Führungsschiene und zugeordnetem Erfassungselement kann zur seitlichen Fixierung als formschlüssig Eingriff ausgebildet sein; beispielsweise über entsprechende Komplementärprofilierungen (z.B. Vorsprung-Rücksprungausbildungen) von Erfassungselementen und Führungsschienenprofilen.

Als Materialien sind vorzugsweise Metall für die Führungsschienen und Metall und/oder Verbundwerkstoffe für den Grundkörper vorgesehen.

Eine Antriebseinrichtung kann beispielsweise eine motorgetriebene Spindel aufweisen, die über eine Spindelnuss und eine Verbindungsstange mit einer in den Führungseinrichtungen geführten Anordnung verbunden ist. Vorzugsweise greift die Antriebseinrichtung an einer Querverbindung zwischen zwei seitlich von einem Grundkörper geführten Schlitten an.

Ausführungsbeispiele der Erfindung werden im Folgenden anhand der beigefügten Zeichnungen näher erläutert. Dabei zeigen:
- Fig. 1: eine schematische perspektivische Darstellung eines Tragflügels mit einer Auftriebsklappenanordnung mit mehreren Auftriebsklappen sowie mit mehreren Auftriebsklappenlagervorrichtungen;
- Fig. 2: eine schematische Querschnittsdarstellung durch den Tragflügel von Fig. 1 zur Verdeutlichung der durch die Auftriebsklappenlagervorrichtung geführten Verstellbewegung der Auftriebsklappen;
- Fig. 3: eine erste perspektivische Ansicht einer Auftriebsklappenlagervorrichtung;
- Fig. 4: eine zweite perspektivische Ansicht einer Auftriebsklappenlagervorrichtung;
- Fig. 5: eine schematische perspektivische Darstellung eines Grundkörpers der Auftriebsklappenlagervorrichtung;
- Fig. 6: eine weitere perspektivische Darstellung des Grundkörpers der Auftriebsklappenlagervorrichtung;
- Fig. 7: eine schematische perspektivische Ansicht einer Schlittenanordnung der Auftriebsklappenlagervorrichtung der Fig. 3 und 4;
- Fig. 8: eine perspektivische schematische Darstellung eines Teils der Schlittenanordnung von Fig. 7 in Eingriff mit einer Führungseinrichtung des Grundkörpers von Fig. 5;
- Fig. 9: eine schematische perspektivische Schnittdarstellung durch den hinteren Bereich des Tragflügels von Fig. 1 auf Höhe einer Längsmittelachse durch die Auftriebsklappenlagervorrichtung;
- Fig. 10: eine weitere geschnittene perspektivische Darstellung durch den hinteren Bereich des Tragflügels auf einer weiteren Schnittebene zur Darstellung der Einbindung des Führungskörpers;
- Fig. 11: eine weitere perspektivische Schnittdarstellung vergleichbar der Fig. 9 und 10 auf einer weiteren Schnittebene zur Darstellung einer Anbindung eines beweglichen Verkleidungsteils;
- Fig. 12: eine Verkleidung zur aerodynamischen Einhausung der Auftriebsklappenlagervorrichtung mit einem stationären Verkleidungsteil und einem beweglichen Verkleidungsteil;
- Fig. 13: eine perspektivische Schnittdarstellung vergleichbar zu den Darstellungen von Fig. 9 bis Fig. 11, wobei der Schnitt auf einer weiteren Ebene geführt ist, um die Anordnung eines Führungsschlittens in dem Tragflügel darzustellen;
- Fig. 14: eine vergleichbare Darstellung wie die Fig. 9 bis 11 und 13, geschnitten auf einer weiteren Längsschnittebene zur Darstellung der Anlenkung der Auftriebsklappe;
- Fig. 15: eine Rückansicht auf eine Auftriebsklappenlagervorrichtung in einer Ausführungsform ohne seitliche Führungsschlitten;
- Fig. 16: eine vergleichbare Darstellung wie die Darstellung von Fig. 15, wobei die Auftriebsklappenlagervorrichtung mit einer umgreifenden Schlittenanordnung mit zwei seitlichen Führungsschlitten abgebildet ist;
- Fig. 17: eine perspektivische schematische Darstellung der Schlittenanordnung mit angelenkter Auftriebsklappe;
- Fig. 18: eine schematische weitere perspektivische Darstellung der Auftriebsklappenlagervorrichtung mit Details zum Führungsschlitten;
- Fig. 19: zwei Rückansichten auf einen bekannten Tragflügel (Fig. 19a) und auf einen Tragflügel gemäß einer Ausführungsform der Erfindung (Fig. 19b), die mit Auftriebsklappenlagervorrichtungen gemäß Ausgestaltungen der Erfindung versehen ist;
- Fig. 20: eine Draufsicht auf den bekannten Tragflügel (Fig. 20a) und den Tragflügel in einer erfindungsgemäßen Ausbildung (Fig. 20b) für einen weiteren Vergleich;
- Fig. 21: eine perspektivische Darstellung einer Auftriebsklappenlagervorrichtung (Fig. 21a) gemäß einer weiteren Ausführungsform der Erfindung und zwei Details (Fig. 21b und Fig. 21c) zu einer Führungseinrichtung derselben;
- Fig. 22: eine schematische perspektivische Darstellung eines Teils einer Führungseinrichtung der weiteren Ausführungsform in Eingriff mit einer Schienenanlenkung;
- Fig. 23: eine Darstellung vergleichbar zu Fig. 22 gemäß einer weiteren Ausführungsform;
- Fig. 24: eine Darstellung vergleichbar der Fig. 22 und 23 gemäß noch einer weiteren Ausführungsform;
- Fig. 25: eine Darstellung vergleichbar der Fig. 22 bis 24 für noch eine weitere Ausführungsform;
- Fig. 26: eine schematische Darstellung einer Führungseinrichtung gemäß noch einer weiteren Ausführungsform der Erfindung;
- Fig. 27: eine schematische Darstellung eines Gleitsteins als Eingreifselement für eine Schienenanlenkung gemäß noch einer weiteren Ausgestaltung der Führungseinrichtung;
- Fig. 28: eine schematische und perspektivische Darstellung von Konturen eines Erefassungselements gemäß einer weiteren Ausführungsform der Führungseinrichtung;
- Fig. 29: eine schematische Kontur und ein Erfassungselement gemäß noch einer weiteren Ausführungsform einer Führungseinrichtung; und
- Fig. 30: eine schematische Kontur eines weiteren Erfassungselements und eine perspektivische Darstellung des Eingriffs des Erfassungselements an einer Führungsschiene.

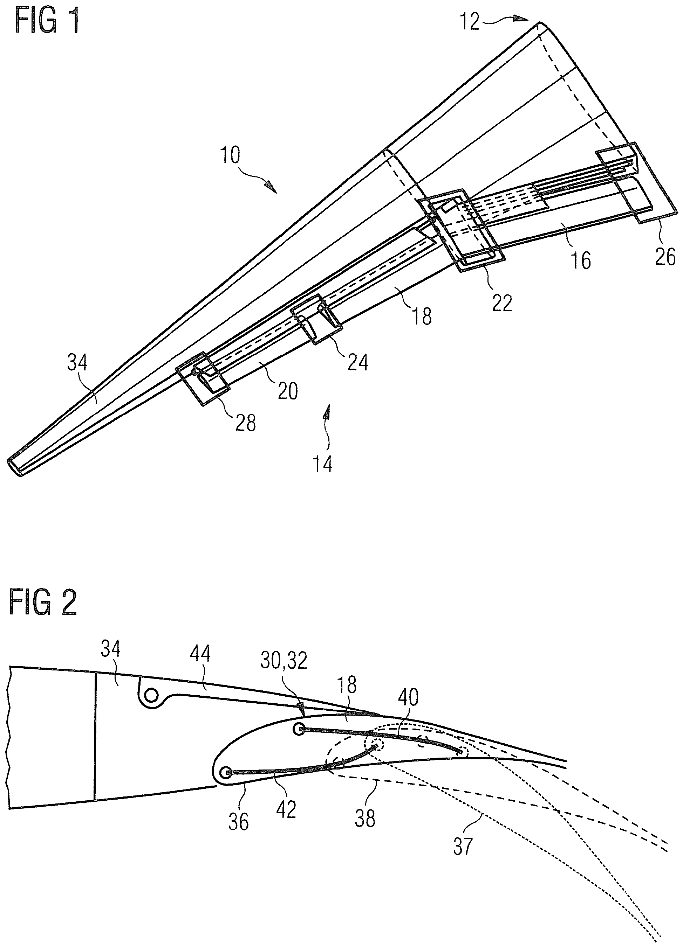

In Fig. 1 ist ein Tragflügel 10 dargestellt, der einen Teil eines Flugzeuges 12 bildet. Der Tragflügel 10 weist im Bereich seiner Hinterkante eine Auftriebsklappenanordnung 14 mit mehreren Auftriebsklappen 16, 18, 20 auf.

Die Auftriebsklappen 16, 18, 20 sind beispielsweise Landeklappen, die in der Startphase und/oder Landephase ausgefahren werden, um den Auftrieb des Tragflügels 10 zu vergrößern, und bei größeren Fluggeschwindigkeiten eingefahren werden, um den Flugbetrieb zu optimieren.

Die Auftriebsklappenanordnung 14 weist eine erste Auftriebsklappe 16, eine zweite Auftriebsklappe 18 und eine dritte Auftriebsklappe 20 sowie eine erste Auftriebsklappenlagervorrichtung 22 zwischen der ersten Auftriebsklappe 16 und der zweiten Auftriebsklappe 18 und eine zweite Auftriebsklappenlagervorrichtung zwischen der zweiten Auftriebsklappe 18 und der dritten Auftriebsklappe 20 auf. Die erste Auftriebsklappe 16 ist an ihrem der Auftriebsklappenlagervorrichtung 22 entgegengesetzten Ende in einer Auftriebsklappenlagereinrichtung 26 gelagert, und die dritte Auftriebsklappe 20 ist an ihrem der zweiten Auftriebsklappenlagervorrichtung 24 entgegengerichteten Ende in einer Auftriebsklappenlagereinrichtung 28 gelagert.

Z.B. ist die erste Auftriebsklappe 16 durch eine innere Landeklappe gebildet, die an ihrem zu dem Flugzeugrumpf hin gerichteten inneren Ende an einer inneren Auftriebsklappenlagereinrichtung 26 und an ihrem äußeren, zum freien Ende des Tragflügels 10 hin gerichteten Ende in der ersten Auftriebsklappenlagervorrichtung 22 gelagert ist. Die zweite Auftriebsklappe 18 ist beispielsweise eine mittlere Landeklappe, die mit ihrem inneren, zu dem Flugzeugrumpf hin gerichteten Ende in der ersten Auftriebsklappenlagervorrichtung 22 und mit ihrem äußeren, zu dem freien Ende des Tragflügels 10 hin gerichteten Ende in der zweiten Auftriebsklappenlagervorrichtung 24 gelagert ist. Die dritte Auftriebsklappe 20 ist beispielsweise eine äußere Landeklappe, die mit ihrem inneren, zu dem Flugzeugrumpf hin gerichteten Ende in der zweiten Auftriebsklappenlagervorrichtung 24 und mit ihrem äußeren, zu dem freien Ende des Tragflügels 10 hin gerichteten Ende in einer äußeren Auftriebsklappenlagereinrichtung 28 gelagert ist.

Die Auftriebsklappenlagervorrichtungen 22, 24 sowie die Auftriebsklappenlagereinrichtungen 26, 28 weisen Führungseinrichtungen 30, 32 auf, die schematisch zur Verdeutlichung der Funktion in Fig. 2 näher dargestellt sind. Fig. 2 zeigt im Profilquerschnitt den Hinterkantenbereich des Tragflügels 10 mit dem Flügelprofil 34 sowie mit der zweiten Auftriebsklappe 18, die in einer vollständig eingefahrenen Stellung 36 für den normalen Flugbetrieb - dargestellt mit durchgezogenen Linien -, einer vollständig ausgefahrenen Stellung 37 für höchsten Auftrieb, beispielsweise während des Landeanfluges, und in einer Zwischenstellung 38 dargestellt ist. Die Verstellbewegung der Auftriebsklappe 18 wird durch die Führungseinrichtungen 30, 32 an den Auftriebsklappenlagervorrichtungen 22, 24 bzw. Auftriebsklappenlagereinrichtungen 26, 28 geführt und durch einen später noch näher erläuterten Antrieb in der jeweiligen Auftriebsklappenlagervorrichtung 22, 24 angetrieben.

Hierzu weisen die Führungseinrichtungen 30, 32 eine erste gekrümmte Führungsschiene 40 und eine zweite gekrümmte Führungsschiene 42 auf. Die erste Führungsschiene 40 ist beispielsweise eine obere Führungsschiene; und die zweite Führungsschiene 42 ist beispielsweise eine untere Führungsschiene. Die Führungsschienen 40, 42 haben eine derartige Krümmung und einen derartigen Verlauf, dass bei Verschiebung der an den Führungseinrichtungen 30, 32 gelagerten Auftriebsklappen 16, 18, 20 die jeweils gewünschten Verstelllagen - Position der Auftriebsklappe 16, 18, 20 in Längsrichtung des Flugzeuges 12 und Neigung der Auftriebsklappe 16, 18, 20 bezüglich des Tragflügels 10 - erreichbar sind.

Weiter ist in Fig. 2 noch oberhalb der Auftriebsklappenanordnung 14 ein Spoiler 44 angedeutet, der beispielsweise zum Bremsen bei der Landung oder zur unterstützenden Steuerung während des Flugbetriebes hochgeklappt werden kann.

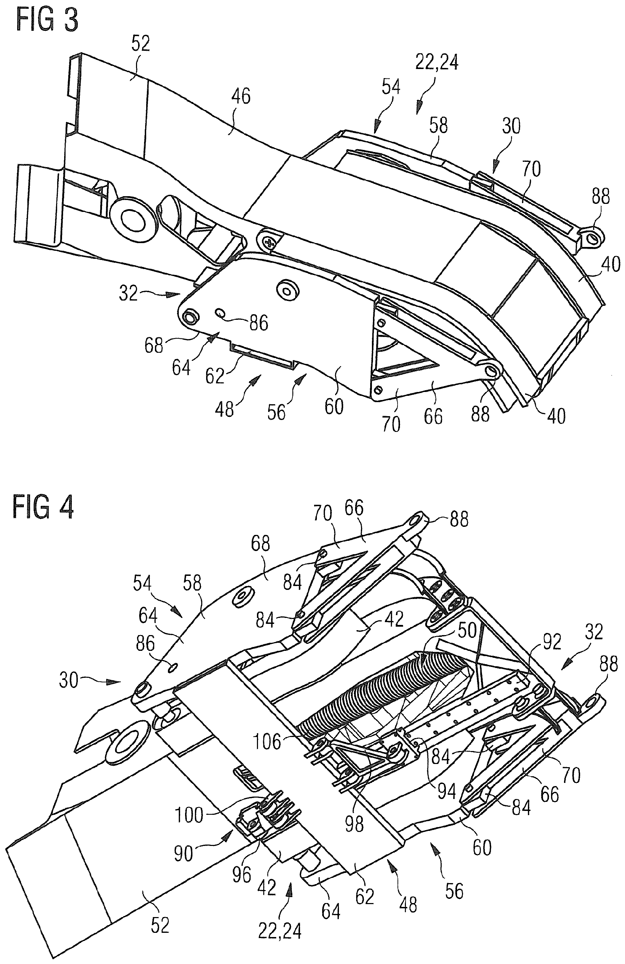

Im Folgenden wird eine bevorzugte Ausgestaltung der Auftriebsklappenlagervorrichtungen 22, 24 anhand der beispielhaften Darstellung der Fig. 3 bis 18 näher erläutert. Der Aufbau der ersten Auftriebsklappenlagervorrichtung 22 und der zweiten Auftriebsklappenlagervorrichtung 24 ist grundsätzlich ähnlich und vergleichbar und wird daher im Folgenden allein anhand des Beispiels der ersten Auftriebsklappenlagervorrichtung 22 näher erläutert. Die zweite Auftriebsklappenlagervorrichtung 24 hat einen ganz analogen Aufbau.

Die Auftriebsklappenlagervorrichtung 22 weist einen Grundkörper 46, eine Schlittenanordnung 48 und eine Antriebseinrichtung 50 auf.

Der Grundkörper 46 ist mit seinem vorderen Endbereich 52 fest mit der Struktur des Tragflügels 10 verbindbar, so dass der Grundkörper 46 stationär angeordnet ist.

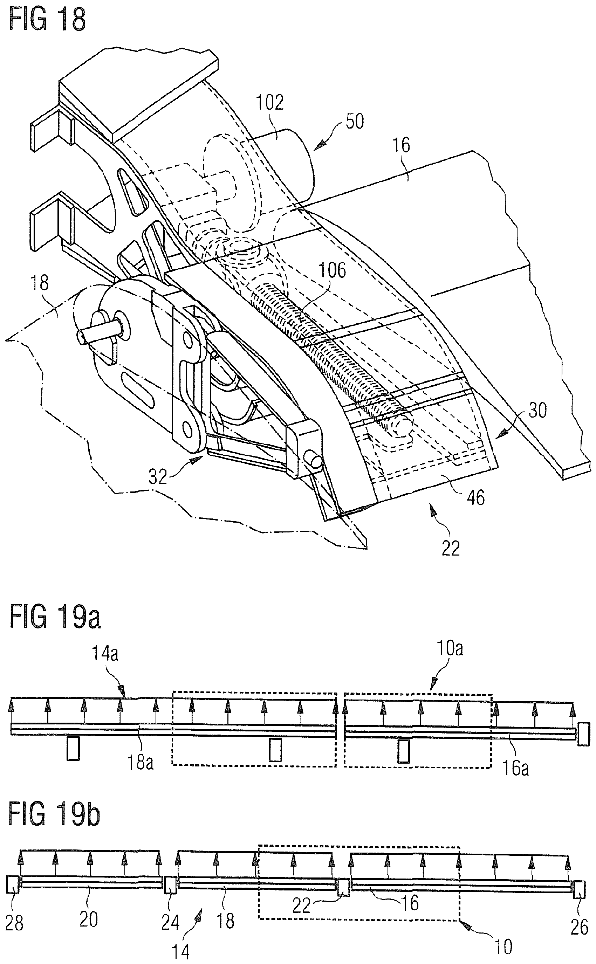

Die Schlittenanordnung 48 ist relativ zu dem Grundkörper 46 in Längsrichtung verschiebbar an den Führungseinrichtungen 30, 32 geführt. Die in Fig 3 und 4 nicht dargestellten Auftriebsklappen 16, 18 sind mit ihren jeweiligen Endbereichen an der Schlittenanordnung 48 befestigbar (siehe z.B. Fig. 18).

Die in den Fig. 4, Fig. 9 und Fig. 18 dargestellet Antriebseinrichtung 50 dient zum motorischen Antreiben der Bewegung der Schlittenanordnung 48, um so die an der Schlittenanordnung 48 befestigten Auftriebsklappen 16, 18 gemeinsam zu verstellen.

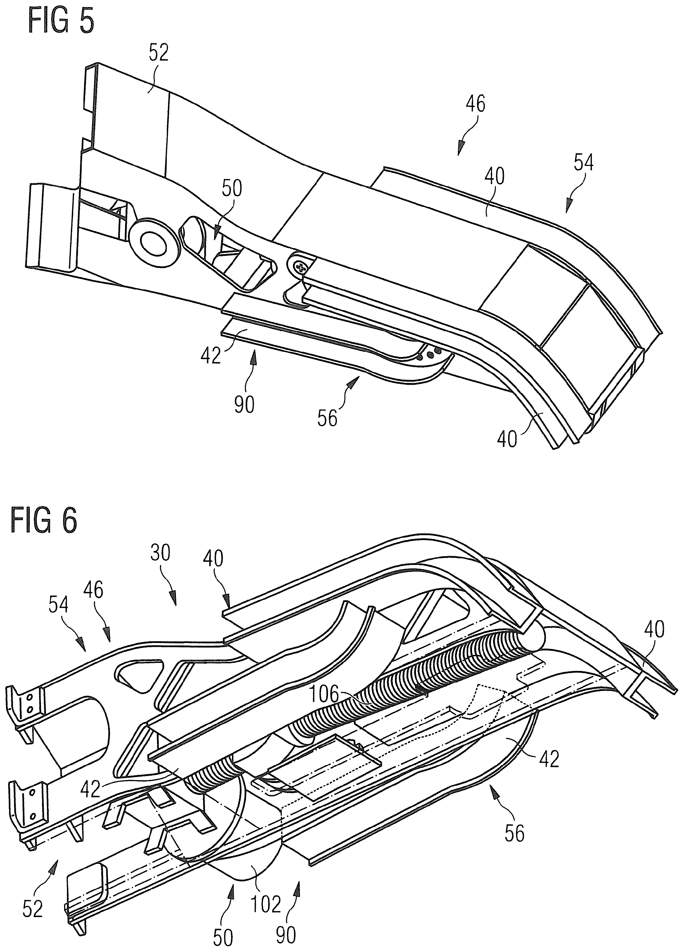

Wie aus den Fig. 5 und 6 ersichtlich, die den Grundkörper 46 ohne die Schlittenanordnung 48 zeigen, ist der Grundkörper 46 auf einer ersten Seite 54 - beispielsweise der zu dem Flugzeugrumpf hin gerichteten inneren Seite - mit einer ersten Führungseinrichtung 30 zum Führen der ersten Auftriebsklappe 16 versehen und auf seiner der ersten Seite 54 entgegen gerichteten zweiten Seite 56 - beispielsweise der zu dem freien Ende des Tragflügels 10 hin gerichteten äußeren Seite - mit einer zweiten Führungseinrichtung 32 zum Führen der zweiten Auftriebsklappe 18 versehen. Sowohl die erste Führungseinrichtung 30 als auch die zweite Führungseinrichtung 32 weisen jeweils die erste Führungsschiene 40 und die zweite Führungsschiene 42 auf. Die erste Führungseinrichtung 30 und die zweite Führungseinrichtung 32 können spiegelbildlich zueinander ausgebildet sein oder sie können in gewissem Maße unterschiedlich zueinander ausgebildet sein, um eine unterschiedliche Bewegung der an der ersten Auftriebsklappenlagervorrichtung 22 gelagerten Auftriebsklappen 16, 18 zu ermöglichen.

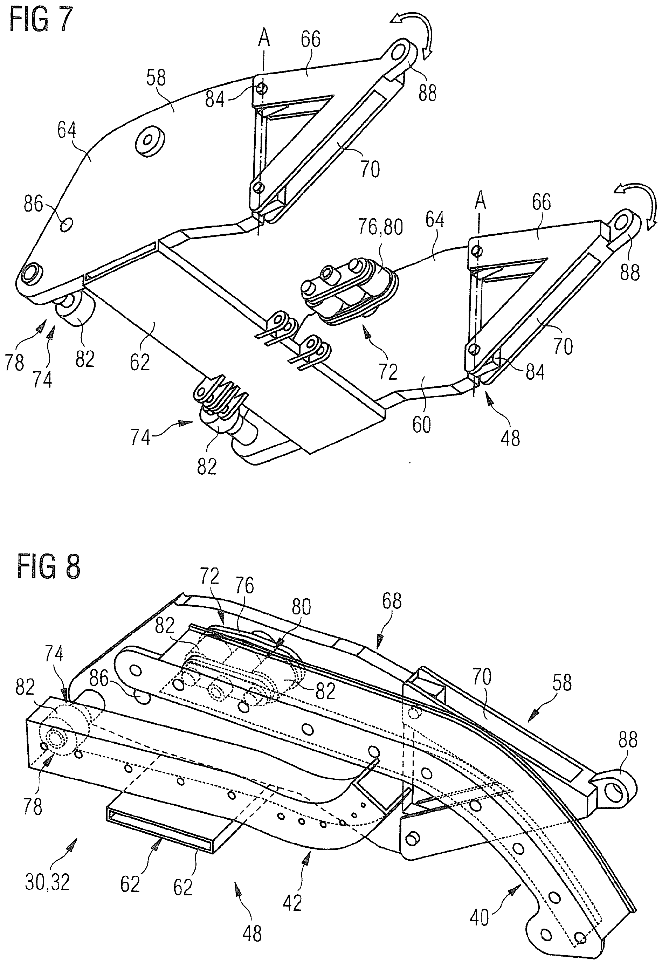

Die Schlittenanordnung 48, die ohne den Grundkörper 46 in Fig. 7 näher dargestellt ist, weist einen ersten Führungsschlitten 58, einen zweiten Führungsschlitten 60 und eine Querverbindung 62 auf, die den ersten Führungsschlitten 58 mit dem zweiten Führungsschlitten 60 verbindet.

Der erste Führungsschlitten 58 ist in der ersten Führungsschiene 40 und der zweiten Führungsschiene 42 geführt, die auf der ersten Seite 54 an dem Grundkörper 46 angeordnet sind, so dass die erste Führungseinrichtung 30 durch diese erste Führungsschiene 40, die zweite Führungsschiene 42 und den ersten Führungsschlitten 58 gebildet ist. Entsprechend ist die zweite Führungseinrichtung 32 durch die auf der zweiten Seite 56 angeordneten Führungsschienen 40, 42 sowie den darin geführten zweiten Führungsschlitten 60 gebildet.

Jeder der Führungsschlitten 58, 60 weist einen ersten Klappenbefestigungsbereich 64 und einen zweiten Klappenbefestigungsbereich 66 auf, die in gewissem Maße beweglich zueinander angelenkt sind.

Beispielsweise ist der erste Klappenbefestigungsbereich 64 durch einen Hauptschlittenkörper 68 gebildet und der zweite Klappenbefestigungsbereich 66 kann durch einen Schwingarm 70 gebildet sein.

Der erste Klappenbefestigungsbereich 64 ist vorzugsweise mit einer ersten Schienenanlenkung 72 zum Anlenken des Führungsschlittens 58, 60 an der ersten Führungsschiene 40 versehen und weiter mit einer zweiten Schienenanlenkung 74 zum Anlenken des Führungsschlittens 58, 60 an der zweiten Führungsschiene 42 versehen. Die Schienenanlenkungen 72, 74 weisen Erfassungselemente oder Eingreifelemente zum Erfassen der jeweiligen Führungsschienen 40, 42 auf.

In dem in den Fig. 3 bis 8 dargestellten Ausführungsbeispiel weist ein erstes Erfassungselement 76 eine Rollenanordnung 80 mit mehreren Rollen auf, die in die in diesem Ausführungsbeispiel kanalartig ausgebildete erste Führungsschiene 40 eingreifen und so von der ersten Führungsschiene 40 beiseitig umfasst werden. Weiter weist in dem hier dargestellten Ausführungsbeispiel ein zweites Erfassungselement 48 eine einzelne Rolle 82 auf, die in die hier ebenfalls kanalartig ausgebildete zweite Führungsschiene 42 eingreift und so von der zweiten Führungsschiene 42 beidseitig zur Führung erfasst wird. Hierdurch ist der erste Klappenbefestigungsbereich 64 in den Führungsschienen 40, 42 geführt. Das erste Erfassungselement 46 führt dabei derart, dass größere Lasten und Drehmomente in die erste Führungsschiene eingeleitet werden kann, während das zweite Erfassungselement 78 zur Richtungsführung und weiteren Abstützung dient.

Wie in Fig. 7 angedeutet ist der zweite Klappenbefestigungsbereich 66 an dem ersten Klappenbefestigungsbereich 64 derart angelenkt, dass er wie durch Pfeile dargestellt um eine Hochachse A relativ zu dem ersten Klappenbefestigungsbereich 64 zur linken oder rechten Seite hin ausschwingen kann.

Beispielsweise ist der Schwingarm 70 durch zwei sphärische Lager 84 an dem Hauptschlittenkörper 78 angelenkt.

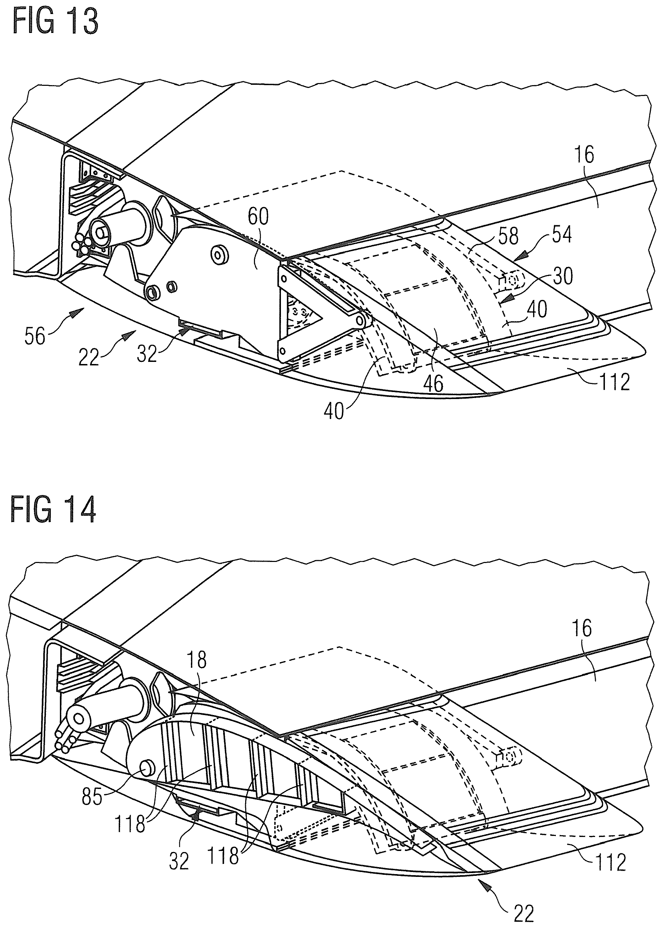

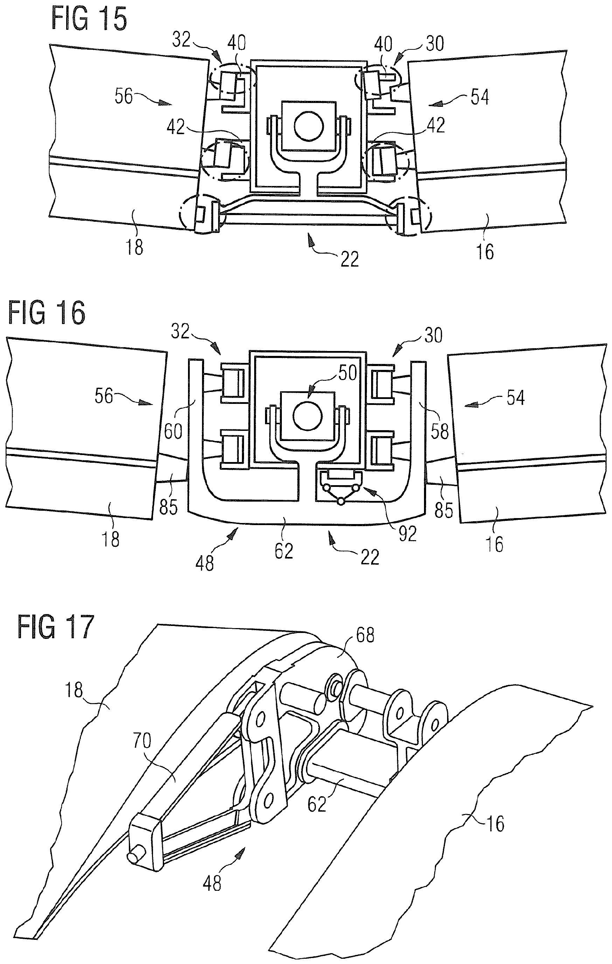

Der erste Klappenbefestigungsbereich 64 weist eine erste Klappenbefestigungseinrichtung 86 auf, um einen vorderen Endbereich der entsprechenden Auftriebsklappe 16, 18 an dem ersten Klappenbefestigungsbereich 64 zu befestigen. Beispielsweise weist die erste Klappenbefestigungseinrichtung 86 als Klappenbefestigungseinrichtung 86 eine Bohrung für einen Befestigungsbolzen 85 (siehe Fig. 14 und 16) auf. Der zweite Klappenbefestigungsbereich 66 weist eine zweite Klappenbefestigungseinrichtung 88 auf, die zu der ersten Klappenbefestigungseinrichtung 86 in Längsrichtung beabstandet ist. Die zweite Klappenbefestigungseinrichtung 88 dient zur Befestigung an dem weiter hinten gelegenen Bereich der entsprechenden Auftriebsklappe 16, 18 und kann ebenfalls eine entsprechende Bohrung aufweisen.

Wie aus den Darstellungen der Fig. 4 und 6 ersichtlich, weist der Grundkörper 46 an einer dritten Seite 90 - hier z.B. die Unterseite - eine dritte Führungsschiene 92 auf, auf der in Längsrichtung beabstandet zueinander ein erstes Führungselement 94 und ein zweites Führungselement 96 zur Seite hin durch Formschluss fixiert geführt sind. Die Führungselemente 94, 96 sind durch Verbindungsstangen 98, 100 mit der Querverbindung 62 verbunden. Die Verbindungsstangen 98, 100 sind gelenkig mit den Führungselementen 94, 96 und der Querverbindung 62 derart gelenkig verbunden, dass Höhenunterschiede sowie Neigungen der Querverbindung 62 zu der dritten Führungsschiene 92 ausgleichbar sind, jedoch Drehmomente um eine Hochachse sowie seitliche Lasten abgestützt werden.

Die Querverbindung 62 ist als Stangenelement oder längliches Plattenelement ausgebildet und verbindet die beiden Hauptschlittenkörper 68 oder allgemeiner den ersten Klappenbefestigungsbereich 64 des ersten Führungsschlittens 58 und den ersten Klappenbefestigungsbereich 64 des zweiten Führungsschlittens 60 miteinander. Insgesamt ist die Schlittenanordnung 48 somit derart ausgebildet, dass sie den Grundkörper 46 umgreift. Dadurch ist auch bei Verwendung von leichtgewichtigen Materialien eine Versteifung erreichbar.

Eine zusätzliche Versteifung und seitliche Fixierung ergibt sich durch die weitere Führung der Schlittenanordnung 48 an der dritten Führungsschiene 92, die auch eine seitliche Fixierung der Schlittenanordnung 48 sowie ein Abstützen gegenüber Verkantungen ermöglicht. Verkantungen der Auftriebsklappen 16, 18 relativ zu dem Tragflügel 10 oder der Auftriebsklappenlagervorrichtung 22 lassen sich über die schwingende Aufhängung der Klappenbefestigungsbereiche 64, 66 ausgleichen.

In Fig. 8 ist die Führung des jeweiligen Führungsschlittens 58 in der ersten Führungsschiene 40 und der zweiten Führungsschiene 42 mit Hilfe der Erfassungselemente 76, 78 dargestellt.

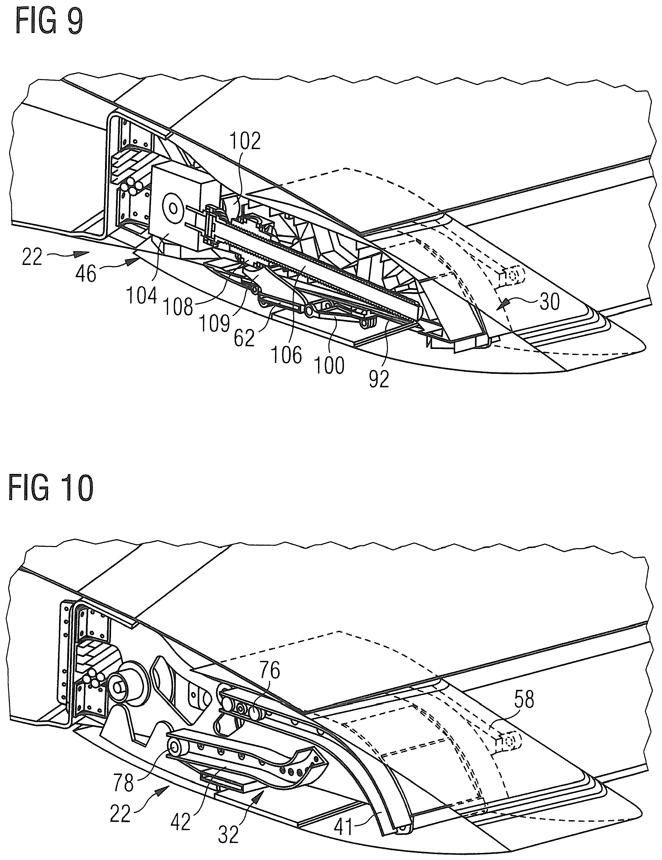

Wie aus Fig. 9 ersichtlich, greift weiter die Antriebseinrichtung 50 an der Querverbindung 62 an, um die Bewegung der Schlittenanordnung 48 in Längsrichtung entlang der Führungsschienen 40, 42 anzutreiben.

Wie aus Fig. 9 und Fig. 18 ersichtlich, weist hierzu die Antriebseinrichtung 50 einen Elektromotor 102 mit angeschlossenem Getriebe 104 und eine durch das Getriebe 104 drehend angetriebene Spindel 106 auf. Auf der Spindel 106 ist durch Drehung derselben eine Spindelnuss 108 in Richtung der Drehachse der Spindel 106 bewegbar. Diese Spindelnuss 108 ist mittels einer Verbindungsstrebe 110 an die Querverbindung 62 angeschlossen.

Die gesamte Antriebseinrichtung 50 ist innerhalb des Grundkörpers 46 aufgenommen und befestigt.

Als Material für den Grundkörper 46 kommen Metall oder Verbundmaterialien, wie insbesondere kohlenstofffaserverstärktes Kunststoffmaterial, in Betracht. Die Führungsschienen 40, 42 sind vorzugsweise aus Metall ausgebildet, beispielsweise aus Aluminium.

Die Schlittenanordnung 48 ist vorzugsweise aus Metall ausgebildet, insbesondere aus Aluminium. Dabei kann die auch als Spindelarm bezeichenbare Querverbindung 62 aus extrudiertem Aluminium gefertigt sein, um eine hohe Biegefähigkeit zu ermöglichen. Der Hauptschlittenkörper 68 kann aus gefrästem Aluminium gefertigt sein, um eine hohe Lastbeständigkeit und Lastübertragung zu ermöglichen. Der Schwingarm 70 kann aus geschmiedetem Aluminium gefertigt sein, um Bewegungen innerhalb der Auftriebsklappenanordnung 14 auszugleichen.

Die entsprechenden Einzelteile und die Anbindung der Auftriebsklappen 16, 18 sind auch gut aus den Fig. 17 und 18 ersichtlich.

Fig. 10 zeigt eine teilweise Schnittdarstellung durch den hinteren Kantenbereich des Tragflügels 10 und die Auftriebsklappenanordnung 14, wobei der Schnitt so gewählt ist, dass die zweite Führungseinrichtung 32 mit der ersten Führungsschiene 40, der zweiten Führungsschiene 42 und den darin geführten Schienenanlenkungen 72, 74 ersichtlich ist.

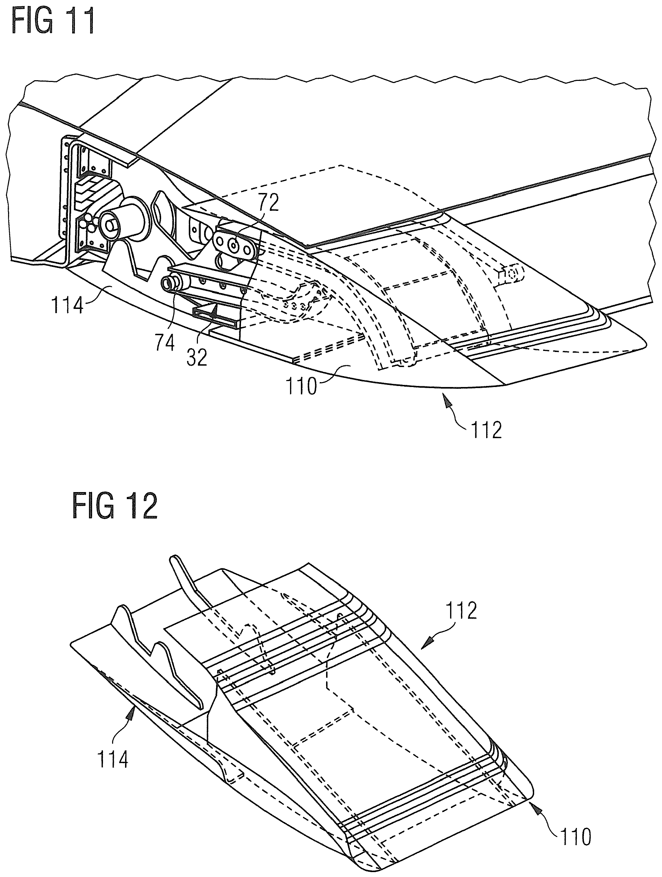

Wie aus Fig. 11 ersichtlich, lässt sich außerdem ein bewegliches Verkleidungsteil 110 einer aerodynamischen Verkleidung 112 an der Schlittenanordnung 48 befestigen. Die vollständige aerodynamische Verkleidung 112 ist in Fig. 12 noch einmal ohne die anderen Teile der Auftriebsklappenlagervorrichtung 22 dargestellt. Die aerodynamische Verkleidung 112 weist das bewegliche Verkleidungsteil 110 und ein stationäres Verkleidungsteil 114 auf, welches an dem Grundkörper 46 stationär befestigt ist. Die beiden Verkleidungsteile 110, 114 haben überlappende Bereiche 116, so dass Spalte minimierbar sind.

Fig. 13 zeigt einen weiteren Schnitt durch den hinteren Bereich des Tragflügels 10 und die Auftriebsklappenanordnung 14, wobei die gesamte erste Auftriebsklappenlagervorrichtung 22 mit Grundkörper 46 und Schlittenanordnung 48 inklusive dem zweiten Führungsschlitten 60 dargestellt ist.

Wie aus der weiteren Schnittdarstellung von Fig. 14 entnehmbar ist, lässt sich an diesen Führungsschlitten 60 die zweite Auftriebsklappe 18 anlenken, die hier im Profil dargestellt ist, um den inneren Aufbau der Auftriebsklappen 16, 18, 20 zu zeigen.

Die Auftriebsklappen 16, 18, 20 sind vorzugsweise aus Verbundmaterialien wie z.B. faserverstärkte Kunststoffe oder aus Metall oder in einer Hybridbauweise hergestellt, in der Verbundmaterialien und Metalle kombiniert eingesetzt werden. Auch andere Bauteile der Auftriebsklappenlagervorrichtung, wie z.B. wenigstens einer der Führungsschlitten - insbesondere der zweite Führungsschlitten 60 -, wenigstens einer der Klappenbefestigungsbereiche - insbesondere der zweite Klappenbefestigungsbereich 66 -, der Schwingarm 70, wenigstens eines der Verkleidungsteile - insbesondere das bewegliche Verkleidungsteil 110 und/oder das stationäre Verkleidungsteil 114 - und/oder die Verkleidung 112 können aus Verbundmaterialien, wie z.B. faserverstärkten Kunststoffen oder aus Metall, oder in einer Hybridbauweise, wobei Verbundmaterial(ien) und Metall(e) kombiniert eingesetzt werden, hergestellt sein.

Wie weiter am besten aus Fig. 14 ersichtlich ist vorzugsweise ein Hauptkörper der Auftriebsklappe 16, 18, 20 mit mehreren Querholmen 118 zur Versteifung versehen. Die Lagerung der Auftriebsklappen 16, 18, 20 erfolgt bei der hier dargestellten Auftriebsklappenanordnung 14 allein über deren seitliche Endbereiche und auf deren Seitenstirnflächen. Daher sind keine Anlenkpunkte auf Breitflächen der Auftriebsklappen 16, 18, 20 nötig, so dass der Aufbau vereinfacht werden kann.

Fig. 15 zeigt eine Ausführungsform der Auftriebsklappenlagervorrichtung 22, wo nur ein unterer Schlitten an die Auftriebsklappen 16, 18, 20 angeschlossen ist, während die Auftriebsklappen 16, 18, 20 ansonsten unmittelbar in die Führungsschienen 40, 42 eingreifen. Diese Ausgestaltung ist zwar grundsätzlich auch möglich, hat aber den in Fig. 15 angedeuteten Nachteil, dass Verbiegungen des Tragflügels 10 zu einer Belastung in den Führungseinrichtungen 30, 32 führen, so dass ein höherer Verschleiß und die Gefahr einer Fehlausrichtung besteht. Fig. 16 zeigt zum Vergleich eine Prinzipskizze der anhand der Fig. 3 bis 14 erläuterten bevorzugten Ausführungsform mit der umgreifenden Schlittenanordnung 48, die aufgrund des Umgreifens und der seitlichen Fixierung für eine Versteifung sorgt, wobei die Anbindung der Auftriebsklappen 16, 18, 20 über die ausgleichenden Führungsschlitten 58, 60 erfolgen kann.

Fig. 17 und Fig. 18 zeigen noch einmal die Funktion dieser ausgleichenden Führungsschlitten 58, 60 und den Gesamtaufbau der Auftriebsklappenlagervorrichtung 22.

Der Aufbau der Auftriebsklappenlagereinrichtungen 26, 28, die das innere Ende der inneren Auftriebsklappe 16 bzw. das äußere Ende der äußeren Auftriebsklappe 20 lagern, ist nicht näher dargestellt, ergibt sich aus dem ausführlich erläuterten Aufbau der Auftriebsklappenlagervorrichtung 22 durch Weglassen einer der Führungseinrichtungen und der Antriebseinrichtung 50. Somit sind die Auftriebsklappenlagereinrichtungen 26, 28 einfach durch eine der Führungseinrichtungen 30, 32 mit den entsprechend gekrümmten Führungsschienen 40, 42 gebildet, an die entweder unmittelbar, wie in Fig. 15 angedeutet oder durch Zwischenlagerung des Führungsschlittens 58, 60 die Auftriebsklappe 18, 20 geführt ist. Somit kommt die hier dargestellte Auftriebsklappenanordnung 14 mit nur zwei Stellantrieben zur Verstellung von drei Auftriebsklappen 16, 18, 20 aus.

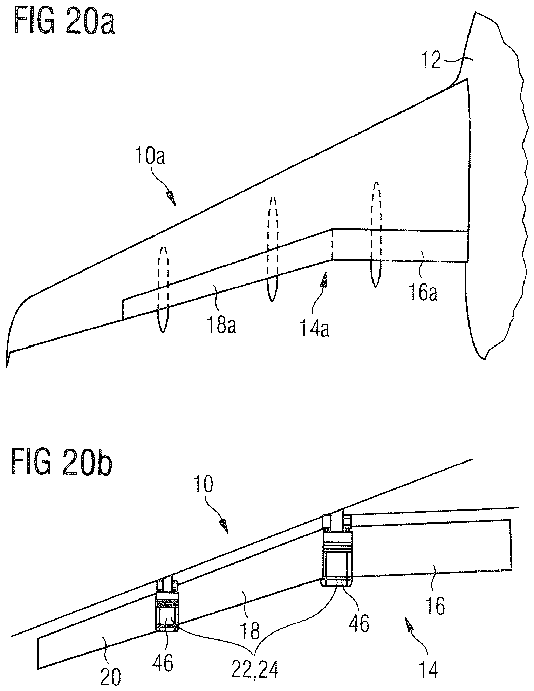

Fig. 19 und 20 zeigen Vergleiche von bekannten Tragflügeln 10a (wie bei dem Airbus-Flugzeug A320 verwendet) mit einer erfindungsgemäßen Ausgestaltung des Tragflügels 10, wobei die Fig. 19a und die Fig. 20a den bekannten Tragflügel 10a und die Fig. 19b und die Fig. 20b den Tragflügel 10 gemäß der erfindungsgemäßen Ausgestaltung zeigen. Die Auftriebsklappenanordnung 14a des bekannten Tragflügels 10a weist zwei Auftriebsklappen 16a, 18a, auf, die jeweils von einem mittleren Bereich der Auftriebsklappen 16a, 18a her verstellbar und angetrieben werden; und zwar mit einer Konstruktion, wie sie grundsätzlich in der EP 0 503 158 A1 bzw. der WO 03/008266 A1 erläutert ist.

Obgleich sich diese bekannte Konstruktion bereits bestens im Einsatz zur Verbesserung der Aerodynamik bewährt hat, ist klar zu sehen, dass die erfindungsgemäß ausgebildete Auftriebsklappenanordnung 14 einen noch geringeren Bauraum und eine noch bessere aerodynamische Einbindung der Auftriebsklappenanordnung 14 in den Tragflügel 10 ermöglicht.

Selbstverständlich sind bei weiteren nicht näher dargestellten Ausführungsformen auch abweichende Anzahlen von Auftriebsklappen 16, 18, 20 möglich. Es wäre auch eine Auftriebsklappenanordnung 14 denkbar, die lediglich zwei Auftriebsklappen, beispielsweise die erste Auftriebsklappe 16 und die zweite Auftriebsklappe 18 und nur eine Auftriebsklappenlagervorrichtungen 22 dazwischen aufweist. Auch sind Ausführungen mit mehr als drei Auftriebsklappen denkbar, wobei vorzugsweise zwischen jeweils zwei benachbarten Auftriebsklappen je eine Auftriebsklappenlagervorrichtung 22, 24 zum gemeinsamen Lagern und Antreiben vorgesehen ist.

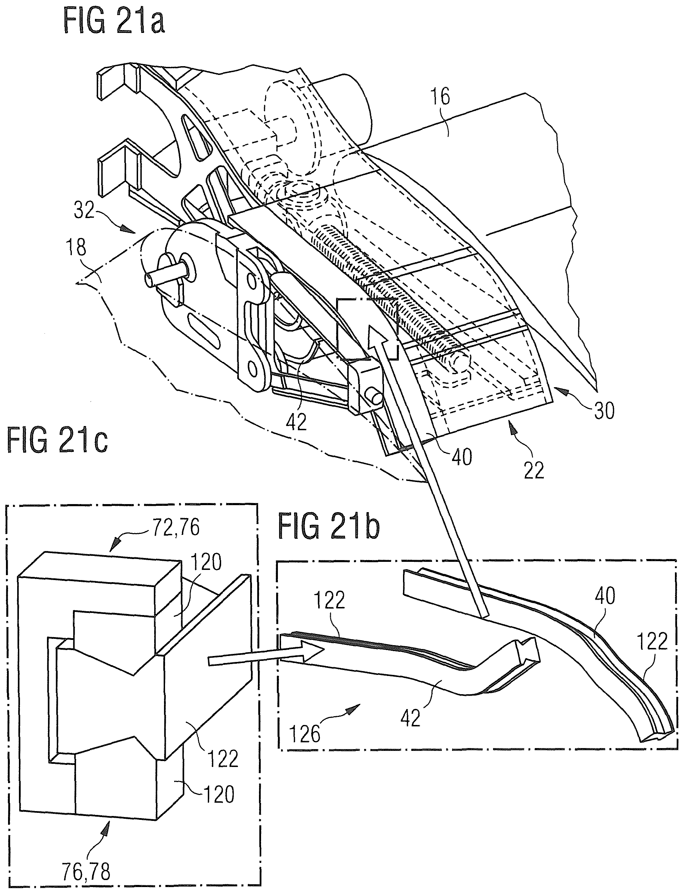

Bei den zuvor anhand der Fig. 1 bis 20 erläuterten Ausführungsformen werden als Erfassungselemente 76, 78 zum Erfassen der Führungsschienen 40, 42 Rollenanordnungen 80 bzw. Rollen 82 eingesetzt. Die Fig. 21 bis 30 zeigen dagegen weitere mögliche Ausführungsformen der Erfassungselemente 76, 78 und daran angepasste Profile der Führungsschienen 40, 42. Dabei werden als Erfassungselemente 76, 78 Gleitsteine 120 verwendet.

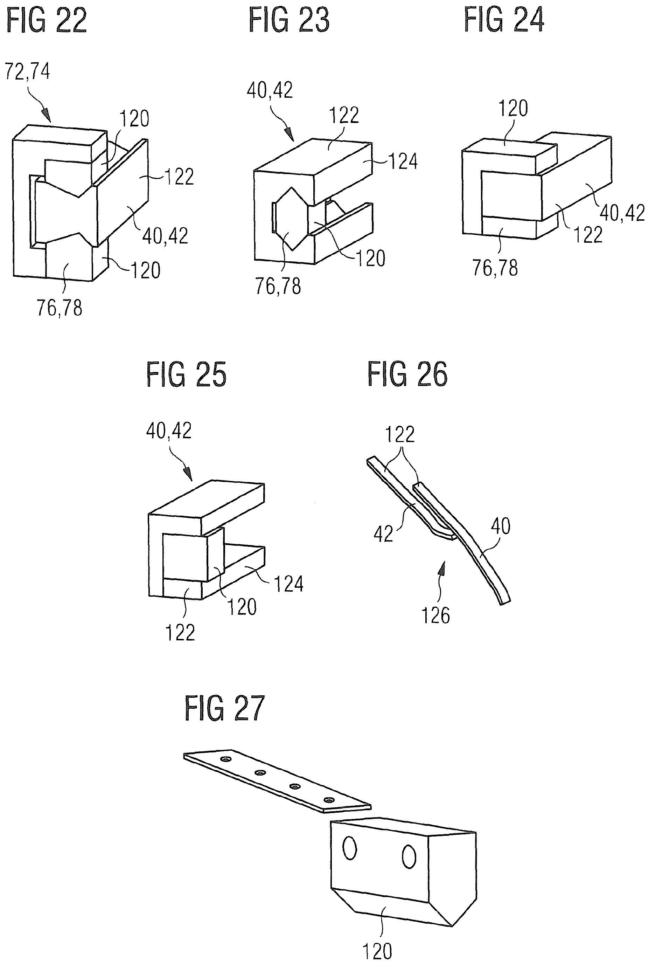

Die Figuren 21, 22 und 24 zeigen dabei eine Ausführungsform, bei der eine Führungsschiene 122 außenseitig durch die zugeordnete Schienenanlenkung 72, 74 mit zwei Gleitsteinen 120 erfasst wird. Die Figuren 23 und 25 zeigen dagegen Ausführungsformen, bei denen C-förmige Führungsschienenprofile bzw. U-förmige Führungsschienenprofile 124 einen darin geführten Gleitstein 120 umfassen.

Die Fig. 21, 22 und 23 zeigen dabei eine formschlüssige Erfassung zwischen Gleitstein 120 und Führungsschiene 122, so dass gleichzeitig eine seitliche Fixierung innerhalb der Führungseinrichtung 30, 32 erreichbar ist. Die Fig. 24 und 25 zeigen Ausgestaltungen, mit denen eine rein reibschlüssige Erfassung zwischen Führungsschiene 122 und Gleitstein 120 realisiert worden ist, so dass auch seitliche Bewegungen ausgeglichen werden können.

Die Fig. 21 zeigt in drei Einzeldarstellungen Fig. 21a, Fig. 21b und Fig. 21c, wie die entsprechenden Ausgestaltungen der Fig. 22 bis 25 in der Auftriebsklappenlagervorrichtung 22 realisiert werden können. Hierzu werden die entsprechenden Führungsschienen 40, 42 durch die Führungsschienen 122 ersetzt (Fig. 21b) und die Schienenanlenkungen 72, 74 werden durch die Erfassung zwischen Gleitstein 120 und Führungsschiene 122 ersetzt (Fig. 21c).

Fig. 26 zeigt eine alternative Führungsschienenanordnung 126, wobei die erste Führungsschiene 40 und die zweite Führungsschiene 42 jeweils das umgreifende Führungsschienenprofil 124 aufweisen.

Bei den Ausführungsformen der Fig. 22 bis 25 ist entweder eine formschlüssige Erfassung oder eine reibschlüssige Erfassung (ohne Formschluss) vorgesehen. Fig. 27 zeigt dagegen eine Ausgestaltung der Schienenanlenkung 72, 74, bei der eine Seite des Gleitsteines 120 zur formschlüssigen Erfassung und eine andere Seite zur reibschlüssigen Erfassung ausgebildet ist. Dabei zeigt sich im Querschnitt beispielsweise oben eine abgeflachte Seite des Gleitsteines 120 und beispielsweise unten eine Seite mit einem Vorsprung (oder alternativ Rücksprung - nicht dargestellt).

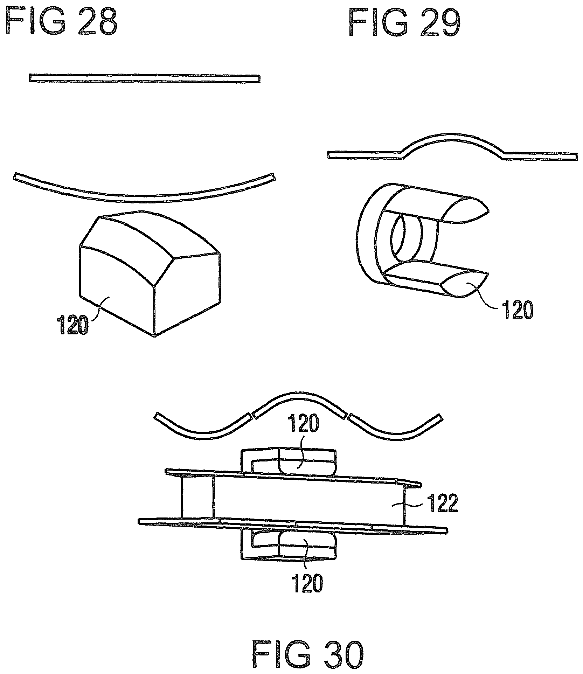

Auch bezüglich der Flächengestaltung in Längsrichtung des Gleitsteines 120 kann es Anpassungen geben. Fig. 28 zeigt z.B. in schematischer Darstellung sowie in perspektivischer Darstellung eine Gestaltung des Gleitsteines 120 mit einseitig flacher Seite und einer abgerundeten Seite. Fig. 29 zeigt eine Ausgestaltung des Gleitsteines 120 (als umgreifender Gleitstein ausgebildet), bei dem flache Bereiche mit konvexen Bereichen kombiniert sind. Fig. 30 zeigt eine Ausgestaltung des Gleitsteines 120 mit einer in Längsrichtung des Gleitsteines 120 gesehen zunächst konvexen, dann konkaven und schließlich wieder konvexen Ausgestaltung. Die zuletzt genannte Ausgestaltung des Gleitsteines 120 ist am meisten bevorzugt, da hierdurch eine Abstützung des Gleitsteines 120 gegen Verdrehungen und/oder eine Abstützung auf einem größeren Stützbereich ermöglicht wird und dennoch eine relativ geringe Kontaktfläche zum Eingriff kommt.

### Bezugszeichenliste

- 10: Tragflügel
- 10a: Tragflügel (Stand der Technik)
- 12: Flugzeug
- 14: Auftriebsklappenanordnung
- 14a: Auftriebsklappenanordnung (Stand der Technik)
- 16: erste Auftriebsklappe
- 16a: erste Auftriebsklappe (Stand der Technik)
- 18: zweite Auftriebsklappe
- 18a: zweite Auftriebsklappe (Stand der Technik)
- 20: dritte Auftriebsklappe
- 22: erste Auftriebsklappenlagervorrichtung
- 24: zweite Auftriebsklappenlagervorrichtung
- 26: Auftriebsklappenlagereinrichtung
- 28: Auftriebsklappenlagereinrichtung
- 30: erste Führungseinrichtung
- 32: zweite Führungseinrichtung
- 34: Flügelprofil
- 36: eingefahrene Stellung
- 37: ausgefahrene Stellung
- 38: Zwischenstellung
- 40: erste Führungsschiene
- 42: zweite Führungsschiene
- 44: Spoiler
- 46: Grundkörper
- 48: Schlittenanordnung
- 50: Antriebseinrichtung
- 52: vorderer Endbereich
- 54: erste Seite
- 56: zweite Seite
- 58: erster Führungsschlitten
- 60: zweiter Führungsschlitten
- 62: Querverbindung
- 64: erster Klappenbefestigungsbereich
- 66: zweiter Klappenbefestigungsbereich
- 68: Hauptschlittenkörper
- 70: Schwingarm
- 72: erste Schienenanlenkung
- 74: zweite Schienenanlenkung
- 76: erstes Erfassungselement
- 78: zweites Erfassungselement
- 80: Rollenanordnung
- 82: Rolle
- 84: sphärische Lager
- 85: Befestigungsbolzen
- 86: erste Klappenbefestigungseinrichtung
- 88: zweite Klappenbefestigungseinrichtung
- 90: dritte Seite
- 92: dritte Führungsschiene
- 94: erstes Führungselement
- 96: zweites Führungselement
- 98: Verbindungsstange
- 100: Verbindungsstange
- 102: Elektromotor
- 104: Getriebe
- 106: Spindel
- 108: Spindelnuss
- 110: bewegliches Verkleidungsteil
- 112: aerodynamische Verkleidung
- 114: stationäres Verkleidungsteil
- 116: überlappende Bereiche
- 118: Querholme
- 120: Gleitstein
- 122: Führungsschiene
- 124: Führungsschienenprofil
- 126: Führungsschienenanordnung
- A: Hochachse

## Patentansprüche

1. Auftriebsklappenanordnung (14) umfassend eine erste Auftriebsklappe (16; 18) und eine seitlich zu der ersten Auftriebsklappe benachbarte zweite Auftriebsklappe (18; 20) **gekennzeichnet durch** eine zwischen der ersten und der zweiten Auftriebsklappe (16, 18; 18, 20) angeordnete Auftriebsklappenlagervorrichtung (22, 24) zur Führung und Verstellung der ersten Auftriebsklappe (16; 18) und der zweiten Auftriebsklappe (18; 20), wobei die Auftriebsklappenlagervorrichtung eine erste Führungseinrichtung (30) zum Führen der ersten Auftriebsklappe (16; 18) und eine zweiten Führungseinrichtung (32) zum Führen der zweiten Auftriebsklappe (18; 20) aufweist,
**dadurch** gekennzeichnet, daß die erste und die zweite Führungseinrichtung (30, 32) jeweils eine erste gekrümmte Führungsschiene (40) und eine zweite gekrümmte Führungsschiene (42) aufweisen, und wobei die erste Führungseinrichtung (30) auf einer ersten Seite (54) der Auftriebsklappenlagervorrichtung (22, 24) angeordnet ist und die zweite Führungseinrichtung (32) auf einer der ersten Seite (54) entgegengerichteten zweiten Seite (56) angeordnet ist.

2. Auftriebsklappenanordnung nach Anspruch 1,
**dadurch gekennzeichnet,**
**dass** eine Antriebseinrichtung (50) zum gleichzeitigen Verstellen der ersten und der zweiten Führungseinrichtung (30, 32) vorgesehen ist.

3. Auftriebsklappenanordnung (14) nach einem der voranstehenden Ansprüche, **dadurch gekennzeichnet,**
**dass** wenigstens eine der Führungseinrichtungen (30, 32) einen Führungsschlitten (58, 60) aufweist, der mittels einer ersten Schienenanlenkung (72) verschiebbar an einer ersten gekrümmten Führungsschiene (40) der Führungseinrichtung (30, 32) verschiebbar geführt ist und mittels einer zweiten Schienenanlenkung (74) verschiebbar an einer zweiten gekrümmten Führungsschiene (32) verschiebbar geführt ist.

4. Auftriebsklappenanordnung (14) nach Anspruch 3,
**dadurch gekennzeichnet,**
**dass** der wenigstens eine Führungsschlitten (58, 60) einen ersten Klappenbefestigungsbereich (64) mit wenigstens einer ersten Klappenbefestigungseinrichtung (86) und eine zweiten Klappenbefestigungsbereich (66) mit wenigstens einer zweiten Klappenbefestigungseinrichtung (88) aufweist, wobei die erste und die zweite Klappenbefestigungseinrichtung (86, 88) voneinander beabstandet sind,
wobei der erste und der zweite Klappenbefestigungsbereich (64, 66) des Führungsschlittens (58, 60) in einer quer zu einer durch die Führungseinrichtung (30, 32) geführten Verstellrichtung verlaufenden Richtung relativ beweglich zueinander aneinander befestigt sind.

5. Auftriebsklappenanordnung (14) nach einem der Ansprüche 3 oder 4, **dadurch gekennzeichnet,**
**dass** die erste und die zweite Führungseinrichtung (30, 32) jeweils mit dem Führungsschlitten (58, 60) versehen sind, wobei der erste Führungsschlitten (58) der ersten Führungseinrichtung (30) und der zweite Führungsschlitten (32) der zweiten Führungseinrichtung (32) mittels einer Querverbindung (62) fest, insbesondere starr, miteinander verbunden sind.

6. Auftriebsklappenanordnung (14) nach einem der voranstehenden Ansprüche, **dadurch gekennzeichnet,**
**dass** ein an einem Tragflügel (10) befestigbarer Grundkörper (46) vorgesehen ist, der auf einer ersten Seite (54) die erste und die zweite Führungsschiene (40, 42) der ersten Führungseinrichtung (30, 32) und auf einer entgegengerichteten zweiten Seite (56) die erste und die zweite Führungsschiene (40, 42) der zweiten Führungseinrichtung (32) aufweist.

7. Auftriebsklappenanordnung (14) nach Anspruch 5 und nach Anspruch 6,
**dadurch gekennzeichnet,**
**dass** eine den ersten Führungsschlitten (58), den zweiten Führungsschlitten (60) und die Querverbindung (62) aufweisende Schlittenanordnung (48) den Grundkörper (46) umgreift.

8. Auftriebsklappenanordnung (14) nach Anspruch 2 und nach Anspruch 7, **dadurch gekennzeichnet,**
**dass** die in dem Grundkörper (46) angeordnete Antriebseinrichtung (50) an der Schlittenanordnung (48), insbesondere an der Querverbindung (62), angreift.

9. Auftriebsklappenanordnung (14) nach einem der Ansprüche 3 bis 8, **dadurch gekennzeichnet,**
**dass** wenigstens eine der Schienenanlenkungen (72, 74) wenigstens eine Rolle (82) aufweist, die an wenigstens einer Rollenbahn der zugeordneten Führungsschiene (40, 42) angreift.

10. Auftriebsklappenanordnung (14) nach einem der Ansprüche 3 bis 9, **dadurch gekennzeichnet,**
**dass** wenigstens eine der Schienenanlenkungen (72, 74) wenigstens einen Gleitstein (120) aufweist, der an einer Gleitbahn der zugeordneten Führungsschiene (40, 42) angreift.

11. Auftriebsklappenanordnung (14) nach einem der Ansprüche 3 bis 10, **dadurch gekennzeichnet,**
**dass** wenigstens eine der Schienenanlenkungen (72, 74) mit der zugeordneten Führungsschiene (40, 42) in formschlüssigen Eingriff ist, um seitliche Querkräfte aufzunehmen.

12. Auftriebsklappenanordnung (14) nach einem der Ansprüche 3 bis 11, **dadurch gekennzeichnet,**
**dass** die erste Schienenanlenkung (72) verschiebbar auf einer ersten Stützfläche an der ersten Führungsschiene (40) abgestützt ist, während die zweite Schienenanlenkung (74) verschiebbar auf einer zweiten Stützfläche an der zweiten Führungsschiene (42) abgestützt ist, wobei die erste Stützfläche größer als die zweite Stützfläche ist und/oder wobei sich die erste Stützfläche in Verschieberichtung über eine größere Strecke als die zweite Stützläche erstreckt.

13. Tragflügel (10) für ein Flugzeug (12), umfassend eine Auftriebsklappenanordnung (14) nach einem der Ansprüche 1 bis 12.

14. Flugzeug (12), umfassend wenigstens einen Tragflügel (10) nach Anspruch 13 und/oder eine Auftriebsklappenanordnung (14) nach einem der Ansprüche 1 bis 12.

## Claims

1. Lift flap arrangement (14), comprising a first lift flap (16; 18) and a second lift flap (18; 20) laterally adjacent to the first lift flap, **characterized by** a lift flap bearing device (22, 24) for guiding and adjusting the first lift flap (16; 18) and the second lift flap (18; 20), wherein said lift flap bearing device comprises a first guide means (30) for guiding the first lift flap (16; 18) and a second guide means (32) for guiding the second lift flap (18; 20), **characterized in that**
the first and the second guide means (30, 32) each comprise a first curved guide rail (40) and a second curved guide rail (42), wherein the first guide means (30) is arranged on a first side (54) of the lift flap bearing device (22, 24) and the second guide means (32) is arranged on a second side (56) opposed to the first side (54).

2. Lift flap arrangement according to claim 1, **characterized in that** there is provided a lift device (50) for simultaneously adjusting the first and the second guide means (30, 32).

3. Lift flap arrangement (14) according to any one of the preceding claims, **characterized in that** at least one of the guide means (30, 32) comprises a guide block (58, 60) slidably guided along a first curved guide rail (40) of the guide means (30, 32) by means of a first rail linkage (72) and slidably guided along a second curved guide rail (32) by means of a second rail linkage (74).

4. Lift flap arrangement (14) according to claim 3, **characterized in that** the at least one guide block (58, 60) has a first flap mounting portion (64) with at least a first flap mounting device (86), and a second flap mounting portion (66) with a second flap mounting device (88), wherein said first and second flap mounting devices (86, 88) are spaced from each other, wherein the first and the second flap mounting portion (64, 66) of the guide block (58, 60) are fixed to one another in a manner movable relative to each other in a direction running transversely to an adjusting direction guided by the guiding means (30, 32).

5. Lift flap arrangement (14) according to any one of the claims 3 or 4, **characterized in that** the first and the second guide means (30, 32) are each provided with the guide block (58, 60), wherein the first guide block (58) of the first guide means (30) and the second guide block (32) of the second guide means (32) are firmly and preferably rigidly connected to one another by means of a cross connection (62).

6. Lift flap arrangement (14) according to any one of the preceding claims, **characterized in that** there is provided a basic body (46) that can be fixed to a wing (10) and has the first and the second guide rail (40, 42) of the first guide means (30, 32) on a first side (54) and the first and the second guide rail (40, 42) of the second guide means (32) on an opposing second side (56).

7. Lift flap arrangement (14) according to claim 5 and claim 6, **characterized in that** a slide assembly (48) comprising the first guide block (58), the second guide block (60) and the cross connection (62) surrounds the basic body (46).

8. Lift flap arrangement (14) according to claim 2 and claim 7, **characterized in that** the driving means (50) arranged in the basic body (46) engages the slide assembly (48), in particular the cross connection (62).

9. Lift flap arrangement (14) according to any one of the claims 3 to 8, characterized that at least one of the rail linkages (72, 74) comprises a roller (82) engaging at least one roller bed of the associated guide rail (40, 42).

10. Lift flap arrangement (14) according to any one of the claims 3 to 9, **characterized in that** at least one of the rail linkages (72, 74) comprises at least one slide block (120) engaging a slide track of the associated guide rail (40, 42).

11. Lift flap arrangement (14) according to any one of the claims 3 to 10, **characterized in that** at least one of the rail linkages (72, 74) is positively engaged with the associated guide rail (40, 42) in order to receive lateral transverse forces.

12. Lift flap arrangement (14) according to any one of the claims 3 to 11, **characterized in that** the first rail linkage (72) is supported for displacement on a first supporting surface on the first guide rail (40), whereas the second rail linkage (74) is supported for displacement on a second supporting surface on the second guide rail (42), wherein the first supporting surface is larger than the second supporting surface and/or wherein the first supporting surface extends a longer distance in the displacement direction than the second supporting surface.

13. Wing (10) for an airplane (12), comprising a lift flap arrangement (14) according to any one of the claims 1 to 12.

14. Airplane (12), comprising at least one wing (10) according to claim 13 and/or a lift flap arrangement (14) according to any one of the claims 1 to 12.

## Revendications

1. Agencement de volets de sustentation (14), comportant un premier volet de sustentation (16 ; 18) et un second volet de sustentation (18 ; 20) latéralement voisin du premier volet de sustentation,
**caractérisé par** un dispositif formant palier de volet de sustentation (22, 24) agencé entre le premier et le second volet de sustentation (16, 18 ; 18, 20) et destiné à guider et à déplacer le premier volet de sustentation (16 ; 18) et le second volet de sustentation (18 ; 20),
dans lequel le dispositif formant palier de volet de sustentation comprend un premier moyen de guidage (30) pour guider le premier volet de sustentation (16 ; 18) et un second moyen de guidage (32) pour guider le second volet de sustentation (18 ; 20),
**caractérisé en ce que**
le premier et le second moyen de guidage (30, 32) comprennent chacun un premier rail de guidage recourbé (40) et un second rail de guidage recourbé (42), et le premier moyen de guidage (30) est agencé sur un premier côté (54) du dispositif formant palier de volet de sustentation (22, 24) et le second moyen de guidage (32) est agencé sur un second côté (56) opposé au premier côté (54).

2. Agencement de volets de sustentation selon la revendication 1,
**caractérisé en ce que**
il est prévu un moyen d'entraînement (50) pour déplacer simultanément le premier et le second moyens de guidage (30, 32).

3. Agencement de volets de sustentation (14) selon l'une des revendications précédentes,
**caractérisé en ce que**
l'un au moins des moyens de guidage (30, 32) comprend un chariot de guidage (58, 60) qui est guidé en déplacement sur un premier rail de guidage recourbé (40) du moyen de guidage (30, 32) à l'aide d'une première articulation de rail (72).

4. Agencement de volets de sustentation (14) selon la revendication 3,
**caractérisé en ce que**
ledit au moins un chariot de guidage (58, 60) présente une première zone de fixation de volet (64) pourvue d'au moins un premier moyen de fixation de volet (86) et une seconde zone de fixation de volet (66) pourvue d'au moins un second moyen de fixation de volet (88), le premier et le second moyens de fixation de volet (86, 88) étant espacés l'un de l'autre, et la première et la seconde zones de fixation de volet (64, 66) du chariot de guidage (58, 60) sont fixées l'une sur l'autre en étant mobiles l'une par rapport à l'autre dans une direction qui s'étend transversalement à une direction de déplacement définie par le moyen de guidage (30, 32).

5. Agencement de volets de sustentation (14) selon l'une des revendications 3 ou 4,
**caractérisé en ce que**
le premier et le second moyen de guidage (30, 32) sont chacun pourvus du chariot de guidage (58, 60), le premier chariot de guidage (58) du premier moyen de guidage (30) et le second chariot de guidage (60) du second moyen de guidage (32) sont reliés fermement, en particulier rigidement, l'un à l'autre à l'aide d'une liaison transversale (62).

6. Agencement de volets de sustentation (14) selon l'une des revendications précédentes,
**caractérisé en ce que**
il est prévu un corps de base (46) à fixer sur une aile portante (10) qui comprend sur un premier côté (54) le premier et le second rail de guidage (40, 42) du premier moyen de guidage (30, 32) et sur un second côté opposé (56) le premier et le second rail de guidage (40, 42) du second moyen de guidage (32).

7. Agencement de volets de sustentation (14) selon la revendication 5 et selon la revendication 6,
**caractérisé en ce que**
un agencement de chariot (48) comprenant le premier chariot de guidage (58), le second chariot de guidage (60) et la liaison transversale (62) entoure le corps de base (46).

8. Agencement de volets de sustentation (14) selon la revendication 2 et selon la revendication 7,
**caractérisé en ce que**
le moyen d'entraînement (50) agencé dans le corps de base (46) attaque l'agencement de chariot (48), en particulier la liaison transversale (62).

9. Agencement de volets de sustentation (14) selon l'une des revendications 3 à 8,
**caractérisé en ce que**
l'une au moins des articulations de rail (72, 74) comprend au moins un galet (82) qui attaque au moins une voie à galets du rail de guidage associé (40, 42).

10. Agencement de volets de sustentation (14) selon l'une des revendications 3 à 9,
**caractérisé en ce que**
l'une au moins des articulations de rail (72, 74) comprend au moins un coulisseau (120) qui attaque une voie de glissement du rail de guidage associé (40, 42).

11. Agencement de volets de sustentation (14) selon l'une des revendications 3 à 10,
**caractérisé en ce que**
l'une au moins des articulations de rail (72, 74) est en engagement par coopération de formes avec le rail de guidage associé (40, 42), afin d'encaisser des forces transversales latérales.

12. Agencement de volets de sustentation (14) selon l'une des revendications 3 à 11,
**caractérisé en ce que**
la première articulation de rail (72) est soutenue en déplacement sur une première surface de soutien sur le premier rail de guidage (40), tandis que la seconde articulation de rail (74) est soutenue en déplacement sur une seconde surface de soutien sur le second rail de guidage (42), la première surface de soutien étant plus grande que la seconde surface de soutien et/ou la première surface de soutien s'étendant en direction de déplacement sur un trajet plus grand que la seconde surface de soutien.

13. Aile portante (10) pour un avion (12), comprenant un agencement de volets de sustentation (14) selon l'une des revendications 1 à 12.

14. Avion (12), comportant au moins une aile portante (10) selon la revendication 13 et/ou un agencement de volets de sustentation (14) selon l'une des revendications 1 à 12.
